# EUROPEAN PATENT APPLICATION

(11) **EP 1 116 548 A2**
(43) Date of publication of application: **18.07.2001**
(21) Application number: 01100922.2
(22) Date of filing: 16.01.2001
(51) Int. Cl.: B23Q 1/01, B23Q 11/08, B23Q 1/62, B23Q 3/155

(54) **A machine tool having a vertical main spindle and a method of making the same**

(30) Priority: 17.01.2000 JP 2000007507; 12.07.2000 JP 2000211687; 18.09.2000 JP 2000282241; 28.09.2000 JP 2000296893
(71) Applicant: TOYODA KOKI KABUSHIKI KAISHA, Kariya-shi Aichi-ken (JP)
(72) Inventor: Abe, Tadayuki, Kariya-shi, Aichi-ken (JP); Yamakage, Tetsuro, Kariya-shi, Aichi-ken (JP); Uetake, Shinji, Kariya-shi, Aichi-ken (JP); Okada, Yasuhiro, Kariya-shi, Aichi-ken (JP); Arai, Yoshihiro, Kariya-shi, Aichi-ken (JP); Takayama, Tomokazu, Kariya-shi, Aichi-ken (JP); Adachi, Hiroshi, Kariya-shi, Aichi-ken (JP)
(74) Representative: Leson, Thomas Johannes Alois, Dipl.-Ing.

(57) **Abstract**

A machine having a vertical main spindle include a bed having a bottom portion and a pair of walls arranged uprightly from both ends of the bottom portion, the sidewalls having horizontal upper mounting surfaces thereon. A first slider is slidably horizontally mounted on the upper mounting surfaces for movement along a first axis. A second slider is slidably horizontally mounted on the first slider and guided by a pair of guide rails arranged on the first slider for movement along a second axis perpendicular to the first axis. A jig apparatus is mounted on the bed for clamping a workpiece at a position lower than the first slider. A spindle head that vertically supports a main spindle is mounted on the second slider so that the main spindle is moved along the third axis perpendicular to the fist and second axes between the guide rails.

## Description

### BACK GROUND OF THE INVENTION

This invention relates to a machine tool having a vertical main spindle that can move along three axes perpendicular to each other toward a workpiece and a method of making the same.

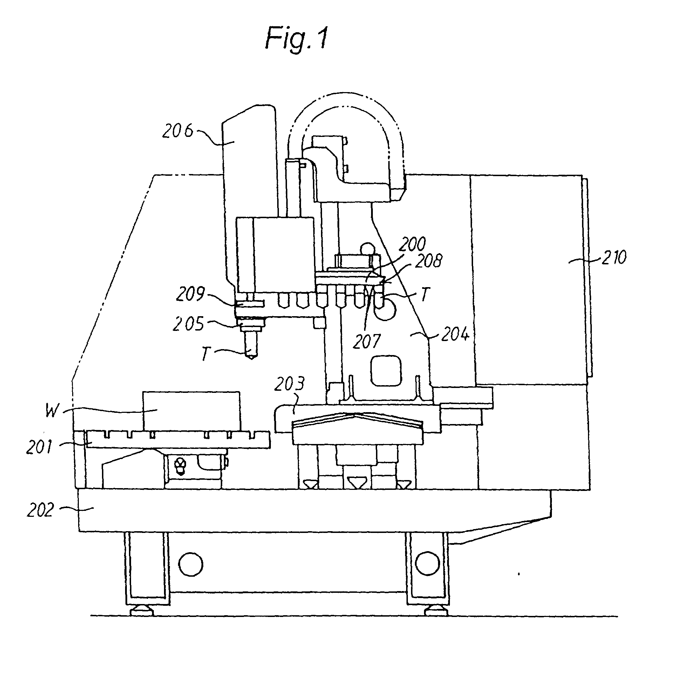

Figure 1 is a side view of a conventional machine tool having a vertical main spindle with an automatic tool changer. As indicated in Figure 1, in the conventional machine tool, a jig device 201 that clamps a workpiece W is mounted on a bed 202, and a saddle 203 that is slidable along an X-axis guided by a pair of guide rails is mounted on the bed 202. A column 204 that is slidable along a Y-axis direction guided by a pair of guide rails is mounted on the saddle 203, and a spindle head 206 that is slidable along a Z-axis guided by a pair of guide rails is mounted on the column 204. A vertical main spindle 205 that is rotatably journaled in the spindle head 206 changeably holds a tool T for machining the workpiece W. A tool storage magazine apparatus 208 having a indexably rotatable magazine plate 200 is mounted on the column 204. The magazine plate 200 has a plurality of tool grippers 207 for gripping each of tools. A tool exchange arm 209 exchanges tools between the main spindle 205 positioned to a tool exchange position and a selected one of tool grippers 207 of the magazine plate 200 indexed to a tool exchange position.

In the conventional machine tool, the spindle head 206 is over hanging from pair of guide rails guiding the saddle 203 on the bed 202. Therefore, a moment around a horizontal axis that is generated by the weight of spindle head 206 and machining force transforms the guide rails mounted on the bed 202. Also, while the saddle 203 is moving, a moment around a vertical axis is generated based on the difference of the loads that act on each of the guide rails, and the saddle 203 slightly rotates because of the moment around a vertical axis. As the center of the rotation of the saddle 203 and the main spindle 205 are apart, there is large displacement of the main spindle 205 because of the rotation of the saddle 203. This results in a problem of decreasing positioning accuracy, i.e., decreasing machining accuracy.

Also, as the guide rails guiding the saddle 203 and column 204 are located lower than the place where a tool cuts a workpiece W, coolant and chips drop on the guide rails. Therefore, there is a problem that the guide rails cannot be completely protected from dissemination of coolant and chips.

In addition, as the saddle 203 is mounted on the guide rails on the bed 202, the machine tool has to be assembled in order of mounting the saddle 203 on the bed 202 and the spindle head 206 on the saddle 203. Therefore, it is impossible to take the production process of pre-assembling a main spindle unit having a main spindle 205 movable along the X, Y, Z-axis, then mounting the pre-assembled spindle head on the bed 202. Consequently, it is impossible to shorten the production time by mounting a jig apparatus 201 and controller box 210 accommodating controllers therein on the bed 202 to assemble the bed unit simultaneous with pre-assembling a main spindle unit, then mounting the main spindle unit on the bed unit.

Also, when the tool storage magazine apparatus 208 is affixed to the side of the column 204, the weight of the column 204 becomes heavy. As the result, the tool storage magazine apparatus 208 cannot increase the number of tools stored in the magazine plate 200 and the feed rate and acceleration of the column 204 and saddle 203 cannot be increased. Therefore, the tool storage magazine apparatus 208 is usually mounted on the bed 202. In this case, in order to smoothly exchange tools between the tool grippers 207 of the magazine plate 200 of the tool storage magazine apparatus 208 indexed to the tool exchange position and the main spindle 205 positioned to the tool exchange position, it is necessary to move the main spindle 205 to the tool exchange position of the magazine plate 200 to set up the tool exchanging position of the main spindle, then memorizing the X, Y, Z-axis coordinates thereof. However, a tool exchanging position of a main spindle could not be set up until a magazine plate becomes rotatable and the main spindle becomes movable toward the magazine plate after mounting a jig device, saddle, column, the main spindle and the tool storage magazine apparatus on the bed and connecting drive apparatuses for moving the saddle, the column and the spindle head to the controller. Therefore, the assembly of the jig apparatus to the bed and the assemblies of the saddle, the column and the spindle head on the bed could not be done at the same time and also the setting up of a tool exchange position of the main spindle could not be done until the assembly of the machine tool is completed. Therefore, the production time becomes long and the lead-time could not be shortened.

To prevent disseminating coolant and machining chips over tools T stored in the tool storage magazine apparatus 208, the tool storage magazine apparatus 208 is usually protected by a cover and a portion of the cover can be opened and closed by a hydraulic cylinder when exchanging tools. Therefore, there are problems that hydraulic cylinders have to be equipped for opening and closing the portion of the cover and it takes time to open and close the portion of the cover.

Also, in order to change a tool T stored in the magazine plate 200 of the tool storage magazine apparatus 208, the tool grippers 207 are rotatably indexed to the tool change position located at the side portion of the machine tool so that an operator manually changes the tool T held by the tool gripper. A controller box 210 accommodating controllers therein to control the machine tool is located at the rear portion of the machine tool to avoid interfering with the tool exchange position. However, recently, to improve productivity, a floor layout is often changed to optimize the arrangement of machine tools having an automatic tool changer to be suitable for a kind of workpieces and production amount. For example, when a production amount is large, machine tools are arranged in parallel relation with each other with small spaces therebetween. In this case, there is a problem with the conventional machine tools mentioned above that an operator could not change a tool T stored in the tool storage magazine apparatus 208 from the tool change position located at the side portion of the machine tool. It is also impossible to locate the controller box at the side portion of the machine tool to locate the tool change position at the rear portion of the machine tool because the controller box has hinged doors to be opened. Also, depending on layouts, it is sometimes necessary to have the tool exchange position at the side of the machine tool. Therefore, It is required to develop the machine tool that has tool exchange positions both at the rear and side portions of the machine tool.

### SUMMARY OF THE INVENTION

It is an object of the present invention to provide a high accuracy machine having a vertical main spindle, wherein a first slider is slidably mounted on an upper mounting surfaces of both side walls of a U-shaped bed, and a second slider is guided by a pair of guide rails on the first slider, and a spindle head is mounted on the second slider to be vertically movable between the guide rails, and thereby the loads generated by the weight of spindle head and cutting force evenly act on the guide rails to improve the traveling and positioning accuracies of the second slider.

It is another object of the present invention to protect guide rails from dissemination of coolant and chips by lowering the place where a tool cuts a workpiece than the guide rails for guiding a first slider on a bed.

It is a further object of the present invention to guide a first slider and a second slider with high accuracy and high rigidity by moving a spindle vertically through openings made at the first and the second sliders to make loads act evenly on each of guide rails guiding the first and second sliders.

A still further object of the present invention is to provide a process of pre-assembling a main spindle unit having a main spindle movable three axial directions perpendicular to each other to improve assembling accuracy, to simplify assembling process and to make a bed common to and promptly applicable to different models of machines.

A still further object of the present invention is to provide a machine having a low height main spindle unit comprising a base, a first slider, a second slider and a spindle head, being movable at high speed and high accuracy with high rigidity.

A still further object of the present invention is to provide a movable cover as a portion of a cover apparatus that is located between a machining area and a tool storage magazine apparatus. The movable cover is affixed to the magazine plate to separate a main spindle and the tool storage magazine apparatus while the magazine plate is at the rest position. The movable cover rotates with the magazine plate to allow exchanging tools between the main spindle and the tool storage magazine apparatus.

A still further object of the present invention is to provide a pre-assembled main spindle unit having a main spindle movable along three axes perpendicular to each other, which is mounted on the upper mounting surfaces of the side walls of the U-shaped bed; and thereby, pre-assembled main spindle units of various kind of machines having vertical main spindles can be simply assembled with high accuracy on common beds.

It is yet another object of the present invention to greatly reduce production time by assembling a tool exchange apparatus to a base of a main spindle unit having a main spindle movable along three axes perpendicular to each other, positioning and affixing the base of the main spindle unit to the upper mounting surfaces on the bed of a bed unit having a jig apparatus; and thereby, it is possible to parallely process setting up the tool exchange position of the main spindle in a predetermined relation with a tool exchange position of a tool storage magazine apparatus and assembling the bed unit.

It is a still further object of the present invention to reduce production time by assembling a tool storage magazine apparatus to a base of a main spindle unit having a main spindle movable along three axes perpendicular to each other, setting up the tool exchange position of the main spindle in a predetermined relation with a tool exchange position of a tool storage magazine apparatus, and then mounting, positioning and fixing the main spindle unit on each of the upper mounting surfaces of the U-shaped bed; and thereby, both a main spindle unit and a bed unit can be assembled at the same time and the positioning of the main spindle unit to the upper mounting surfaces of the bed is greatly simplified.

It is a still further object of the present invention to provide greatly reduce production time by assembling a tool storage magazine apparatus to a base of a main spindle unit having a main spindle movable along three axes perpendicular to each other, mounting the main spindle unit having the tool storage magazine apparatus on the upper reference surfaces of a reference bed for pre-assembling to set up the tool exchange position of the main spindle in a predetermined relation with a tool exchange position of a tool storage magazine apparatus, and thereafter mounting and positioning the main spindle unit on the upper mounting surfaces of the bed of the bed unit; and thereby, it is possible to parallely process pre-assembling the main spindle unit, setting up the tool exchange position of the main spindle and pre-assembling the bed unit.

A still further object of the present invention is to provide a tool exchange position located at the rear portion of the machine for changing tools stored in a tool storage magazine apparatus by providing a through space at a controller box fixed at the rear end of a bed and allowing to change tools stored in the tool storage magazine apparatus from behind the machine tool through the through space.

A still further object of the present invention is to provide better accessibility from behind a machine tool to a tool storage magazine apparatus and a shorter total length of the machine tool by providing a through space at a controller box fixed at the rear end of a U-shaped bed and locating the rear end portion of the tool exchange apparatus within the through space; and thereby, it is possible to easily change tools stored in the tool storage magazine apparatus from behind the machine tool through the through space.

A still further object of the present invention is to provide tool exchange positions both at the rear and side of a machine tool for changing tools stored in a tool storage magazine apparatus by providing space for changing tools at the position opposing to the rear side portion of a tool storage magazine apparatus between the rear end of the bed and the back face of a controller box that has a through space and is fixed at the rear end of a bed.

### BRIEF DESCRIPTION OF THE DRAWING

The invention will now be described with reference to the accompanying drawings wherein:
Figure 1 is a side view of a conventional machine tool having a tool storage magazine apparatus.
Figure 2 is a front view of a vertical machine of the first embodiment of the invention.
Figure 3 is a right side view of Figure 2.
Figure 4 is a sectional view taken along line A-A in Figure 3.
Figure 5 is a sectional view taken along line B-B in Figure 2.
Figure 6 is a perspective view of a machine indicating each component.
Figure 7 is a sectional view taken along line C-C in Figure 3.
Figure 8 is a perspective view of a tool storage magazine apparatus of the present invention, with certain parts omitted.
Figure 9 is a view in the direction of the arrow D in Figure. 8.
Figure 10 is a perspective view of a vertical machine, illustrating the second embodiment of the invention.
Figure 11 is a side view of Figure 10.
Figure 12 is a plane view of Figure 10.
Figure 13 is a view in the direction of arrow E in Figure 11.
Figure 14 is a perspective view of a reference bed and a CNC controller for pre-assembling.
Figure 15 is an enlarged sectional view of mounting a base on a reference bed.
Figure 16 is a perspective view of a main spindle unit having a main spindle for drilling.
Figure 17 is a perspective view of a main spindle having a main spindle unit for measuring.
Figure 18 is a perspective view of a main spindle unit having a main spindle for laser machining.
Figure 19 is a perspective view of a main spindle unit having a main spindle for electric spark machining.
Figure 20 is a rear view of a machine having another embodiment of controller boxes.

### DESCRIPTION OF THE PREFFERED EMBODIMENT

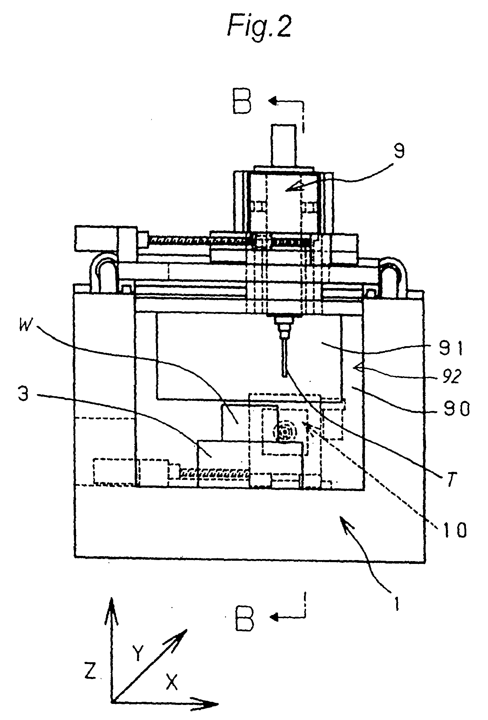

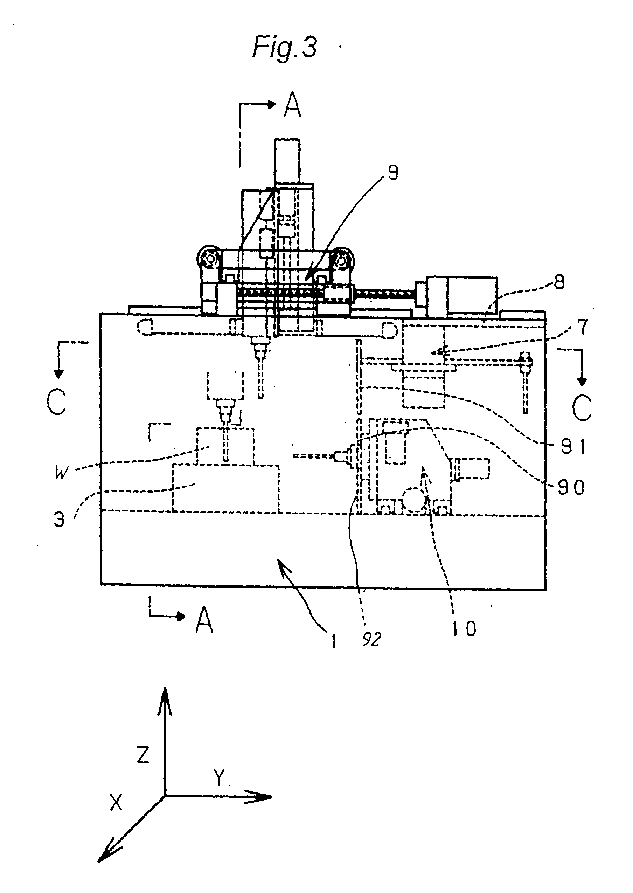

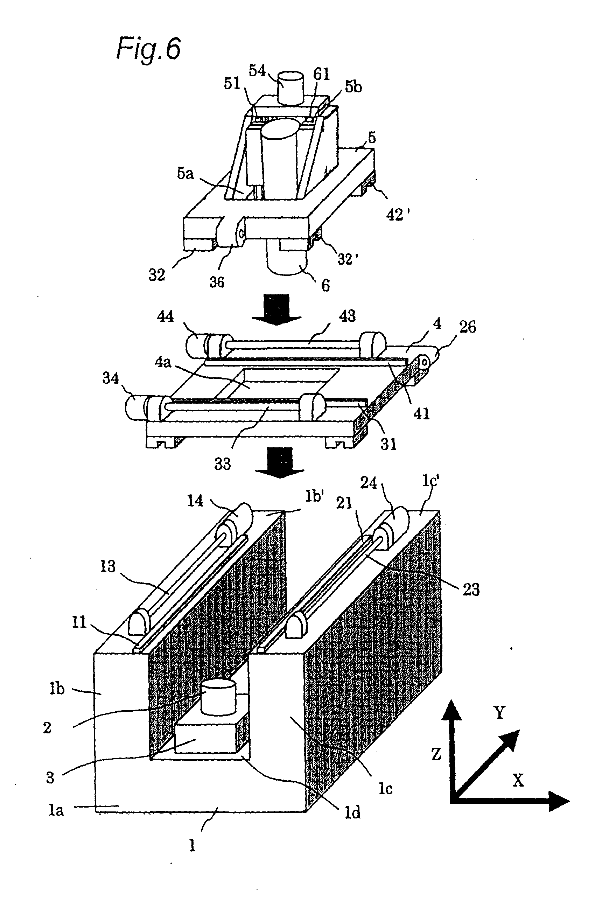

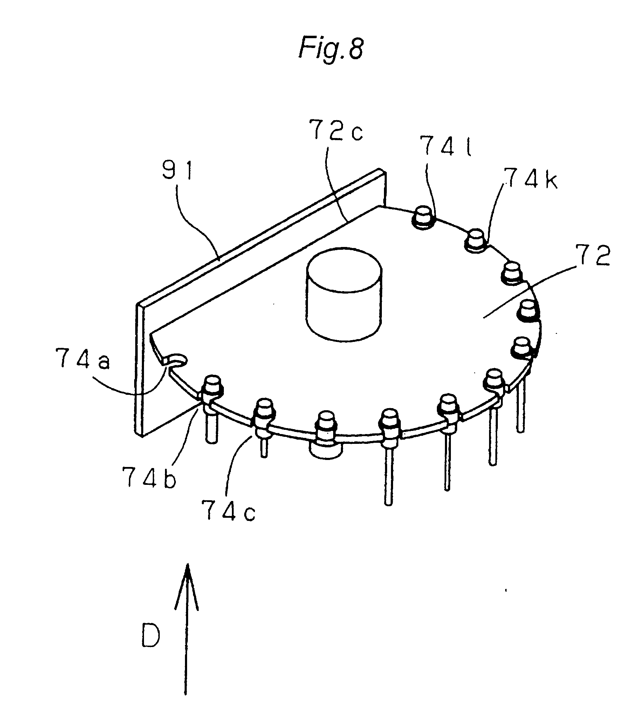

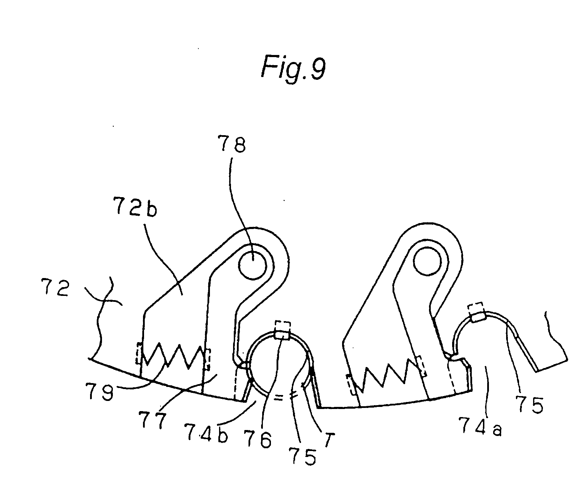

The structure of the first embodiment of this invention will now be explained with reference to the accompanying drawings of Figure 1 to Figure 9. As shown in Figure 2 and Figure 3, fundamental components of a machine tools having vertical main spindles related to the present invention are a jig apparatus 3 clamping a workpiece W and being mounted on the front bottom portion (operator side) of a U-shaped bed 1, a main spindle apparatus 9 arranged at the front upper portion of the bed 1 and a tool storage magazine apparatus 7 fastened to a plate 8 that is mounted to the rear upper mounting surfaces of the bed 1.

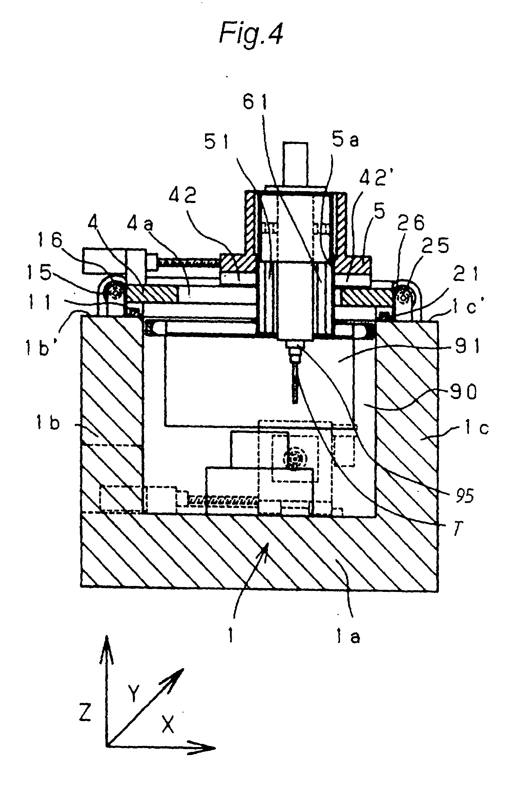

The structure of a vertical main spindle apparatus 9 will now be described with reference to the accompanying drawings of Figure 4 to Figure 6. The vertical main spindle apparatus 9 comprises the first slider 4, the second slider 5 and spindle head 6 rotatably supporting a vertical main spindle 95. The U-shaped bed 1 comprises a bottom portion 1a, left wall 1b and right wall 1c. A guide rail 11 is fastened to the upper mounting surface 1b' of the left wall 1b. A guide rail 21 is fastened to the upper mounting surface 1c' of the right wall lc parallel to the guide rail 11. On the guide rails 11 and 21, the first slider 4 of the vertical main spindle apparatus 9 is slidably mounted. At the center portion of the first slider 4, a lower window 4a that takes a form of nearly a square shape is arranged. On the upper portion of the first slider 4, a guide rail 31 and 41 are secured at the both sides of the lower window 4a in a right and left direction (X-axis direction) perpendicular to the guide rails 11 and 21. On the guide rail 31 and 41, the second slider 5 is slidably mounted. At the four corners of the lower surface of the second slider 5, a slide block 32 and 32' that engage the above mentioned guide rail 31 and a slide block 42 and 42' that engage the above mentioned guide rail 41 are mounted to the second slider 5.

An upper window 5a in form of a nearly square shape is arranged at the center area of the second slider 5. A spindle head 6 is able to vertically move through the upper window 5a. On the second slider 5, a vertical board having a vertical surface 5b is arranged parallel to and between the guide rails 31 and 41. The guide rails 51 and 61 are mounted to the vertical surface 5b in vertical direction (Z axis direction). The spindle head 6 is slidably supported by the guide rails 51 and 61.

Projection portions 16, 26 are arranged at the side surfaces of the first slider 4 parallel to the guide rails 11, 12 and nuts 15, 25 are fastened in the projection portions 16, 26 respectively. Ball screws 13, 23 engage to the nuts 15, 25 respectively. The ball screws 13, 23 are rotatably supported at outside of and parallel to the guide rails 11, 21 on the upper surface 1b', 1c' of the bed 1. The ball screws 13, 23 are connected to respective output shafts of Y-axis drive servo motors 14, 24.

Projection portions 36, 46 are arranged at the both side surfaces of the second slider 5 parallel to the guide rails 31, 41 and respective nuts 35, 45 are fastened to the projection portions 36, 46. Respective ball screws 33, 43 engage to the nuts 35, 45. The ball screws 33, 43 are rotatably supported at outside of and parallel to the guide rails 31, 41 on the upper surface of the first slider 4. The ball screws 33, 43 are connected to output shafts of X-axis drive servo motors 34, 44.

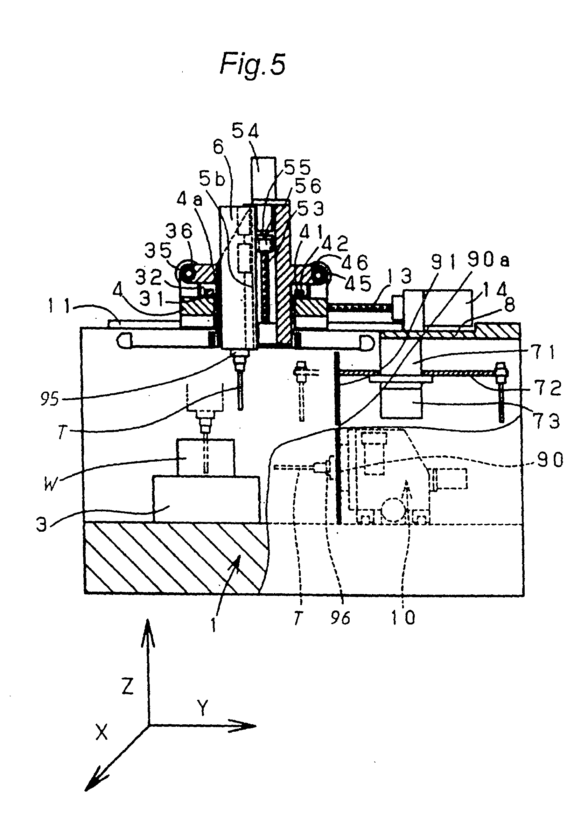

As shown in Figure 5, the spindle head 6 has a projection portion 56 to which a nut 55 is fastened. A ball screw 53 engages to the nut 55. The ball screw 53 is rotatably supported parallel to a Z-axis to the vertical surface 5b of the second slider 5. The ball screw 53 is connected to a Z-axis drive servo motor 54.

Further, it is possible to mount a horizontal main spindle apparatus 10, as shown in Figure 3 and 5, on the rear bottom portion of the bed 1. This horizontal main spindle apparatus 10 has a horizontal main spindle 96 which holds a tool T at the front portion thereof, and is numerically controlled to move X, Y and Z-axis directions for machining a workpiece W. This horizontal main spindle apparatus 10 is allowed to be mounted by making a space at the bottom portion of the bed 1 by hanging a tool storage magazine apparatus 7 from the upper portion of the bed 1. It is possible to machine the side areas of the workpiece W by using the horizontal main spindle apparatus 10, which is impossible by using the vertical main spindle apparatus 9.

As shown in Figure 4, Figure 5 and Figure 7 to Figure 9, the tool storage magazine apparatus 7 is mounted to a plate 8 that is secured to the upper mounting surfaces of 1b' and 1c' at the rear portion of the bed 1. The tool storage magazine apparatus 7 comprises a reduction gear 71 hanging down from the plate 8, a magazine plate 72 and a servo motor 73. The magazine plate 72 is connected to the power axis of the reduction gear 71 and the servo motor 73 is affixed to the other end of the reduction gear 71. Thereby, magazine plate 72 can be indexed to certain angles.

The magazine plate 72 is radially provided with semicircle-shaped tool hold portions 74a to 741 at the outer circumference except for a straight portion 72c. In the semicircle-shaped tool hold portions 74a to 741, projections 75 which engage the circular groves of tools T are arranged along each of the inner circumferences of the tool hold portions. Thereby, the axial movements of tools T are limited.

At the tool hold portions 74a to 74l of the magazine plate 72, there are keys 76 to engage the key slots of tools T. Therefore, the tools T do not rotate around the axes thereof while being stored in the magazine plate 72. Recesses 72b are arranged at the lower surface of the magazine plate 72 near each of tool hold portions. At the recesses 72b, nails 77 that are affixed by screw pins 78 are rotatable around the axes of the screw pins 78. The nails 77 that are provided with sloped faces for smoothly gripping tools T are pressed by springs 79 to prevent tools T dropping from the tool hold portions.

At the front of the machine tool, an open and close cover, not illustrated, which is opened when a workpiece is carried into the machine tool is arranged. At the upper portion of the bed 1, winding-up type covers are arranged along the X -axis and Y-axis to cover the operation space defined between the right and left walls 1b, 1c of the bed 1 while the spindle head 6 is moved. A fixed cover 90 of a cover apparatus 92 is fastened to inside of the right and left walls 1b, 1c of the bed 1 parallel to the X-axis. A movable cover 91 is fastened to the straight portion 72c and rotates with the magazine plate 72 as one body. The fixed cover 90 is provided with an opening 90a that allows rotation of the movable cover 91 and is closed by the movable cover 91. Further, a bellows-type cover is arranged between the fixed cover 90 and the horizontal main spindle apparatus 10 to keep the machining area enclosed while the spindle head of the horizontal main spindle apparatus 10 is moved. Therefore, the machining area is enclosed and the coolant and chips will not be disseminated outside while machining.

Next, the operations of the above embodiment will now be explained. The Y-axis feeding servo motor 14, 24 and X-axis feeding servo motor 34, 44 are synchronously controlled by a pre-programmed numerical controller with feed-back information indicating the present position of the first slider 4 and the second slider 5, which are detected by each of encoders affixed to each of servo motors. The Z-axis servo motor 54 is feed-back controlled by a pre-programmed numerical controller based on the present position feed-back information of the spindle head 6 detected by the encoder affixed to the Z-axis servo motor 54. Therefore, the spindle head 6 can be positioned and controlled along X, Y and Z-axis, and a tool T held in the lower end of the main spindle 95 journaled by the spindle head 6 can be three-dimensionally positioned toward a workpiece W for machining.

To move the second slider 5 leftward, the X-axis feeding servo motors 34, 44 rotatably drive the ball screws 33, 43 engaging nuts 35, 45 to give propelling power to the projections 36, 46 leftward. The second slider 5 receives rightward friction resistance from the guide rails 31, 41. As the X-axis servo motors 34, 44 are synchronously drive the ball screws 33, 43, the slant around a vertical axis of the second slider is very little. However, the second slider 5 slightly rotates while moving by the differences of the synchronous movements and the differences of the friction resistance received from the guide rails 31, 41. Also, when the second slider 5 is moved rightward, the second slider 5 receives opposite forces from those while being moved leftward. Therefore, the second slider 5 is rotated in the different direction when positioned by moving leftward from when positioned by moving rightward. In the present invention, the center of this rotation is located between the guide rails 31, 41 and the position of the main spindle 95 is near the center; and therefore, there are a few errors of positioning between positioning the second slider 5 by leftward movements thereof and positioning the same by rightward movements. Consequently, while machining the circular surface of the workpiece W by contouring, a machine tool can minimize the errors of dimensional accuracy of workpieces generated by changing the references of X-Y coordinates.

Also, the propelling forces from the ball screws 33, 43 act on the second slider 5 at both sides of the center of the weights of second slider 5 and the main spindle 95 so that the ball screws 33, 43 evenly receive the forces of inertia generated from the weights when the second slider 5 is accelerated and decelerated. Therefore, the force slanting the second slider 5 is extremely decreases and the second slider 5 is accelerated and decelerated smoothly.

Next, the movements of the automatic tool change will be explained.

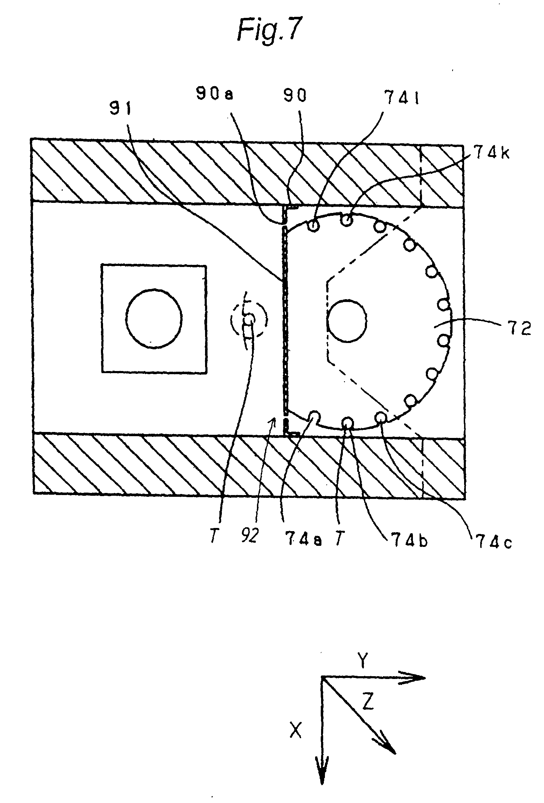

As shown in Figure 7, while machining, the movable cover 91 closes the opening 90a of the fixed cover 90. After completing the machining operations by a tool T, the magazine plate 72 is rotated clockwise to position the empty tool hold portion 74a of the magazine plate 72 to line up with the tool exchange position of the main spindle 95 in a right and left direction (X-axis direction).

At the above lined up position, the main spindle 95 is moved back along the Y-axis until the tool hold groove 74a of the tool T fixed at the end of the main spindle 95 engages the circular projection 75 of the tool hold portion 74a of the magazine plate 72. Then, the draw-bolt in the main spindle 95 is released to unclamp the tool T and the main spindle 95 is moved upward to be completely apart from the tool shank portion.

Then, by rotating the magazine plate 72 clockwise further, the next tool T held in the other tool hold portion 74b of the magazine plate 72 is lined up with the axis of the main spindle 95. At that position, the spindle head 95 is moved downward along the Z-axis to receive the shank of the tool T into the tool holding hole at the lower end of the main spindle 95, and grip the tool T by means of the gripping device. After the spindle head 6 is moved forward along the Y-axis to reach the position where the magazine plate 72 (including the movable cover 91) is able to rotate without interfering with the spindle head 6, the magazine plate 72 is rotated anti-clockwise and returned to the initial rest position. In this stage, the opening 90a of the fixed cover 90 for the tool exchange apparatus are completely closed by the movable cover 91, and then machining a workpiece by tool T starts.

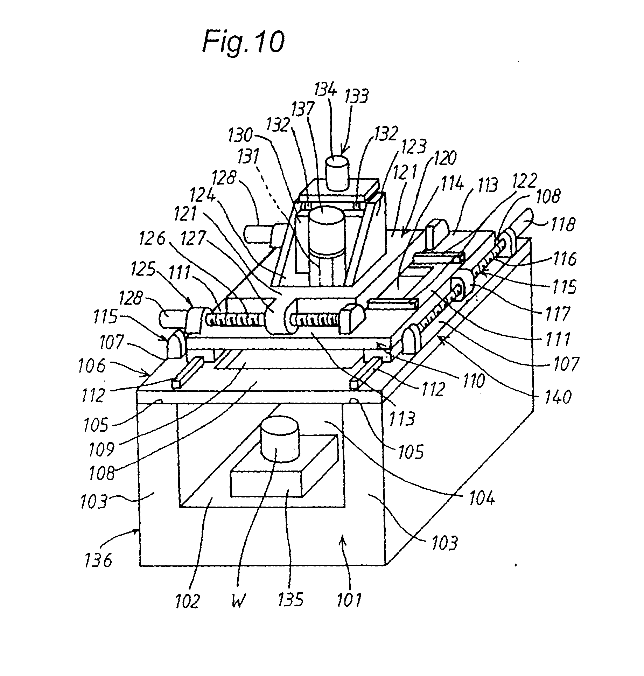

Next, the second embodiment of a machine tool having a vertical main spindle, in which the base of the main spindle unit having a movable main spindle along the three axes perpendicular to each other is mounted on the upper mounting surfaces of the U-shaped bed, will be explained with reference to the accompanying drawings of Figure 10 to Figure 13.

In Figure 10, 101 is a U-shaped bed used for a machine tool having a vertical main spindle. A pair of side walls 103 are arranged uprightly from the both sides of the bottom portion 102 of the bed 101. The operation space 104 is defined between the side walls 103. The horizontal upper mounting surfaces 105 are arranged on each of the side walls 103 of the bed 101. A jig apparatus 135 for positioning and clamping a workpiece W is located at the front bottom portion 102 of the bed 101 below the horizontal upper mounting surfaces 105 in the operation space 104. Thus, the bed unit 136 comprises the jig apparatus 135 for clamping a workpiece W on the bottom portion 102 of the bed 101 in the operation space 104.

Next, the structure of the main spindle unit 140 having the movable main spindle 131 along three axes perpendicular to each other will be explained. A base 106 of the main spindle unit 140 is provided with a pair of first guide portions 107 that are fastened to each of the horizontal upper mounting surfaces 105 of the side walls 103. The both ends of the first guide portions 107 are connected by a pair of connection portions 108 and a through space 109 leading to the operation space 104 is formed in the center area surrounded by the first guide portions 107 and the connection portions 108. A first slider 110 is mounted on the base 106 and slidable along the first axis (Y-axis) that is horizontal and parallel to the side walls 103. A pair of first slide portions 111 of the first slider 110 are slidably mounted along the first axis on a pair of first guide rails 112 that are secured to each of the upper mounting surfaces of the first guide portions 107 respectively. The first slide portions 111 are slidably mounted on the second guide rails 112. A pair of second guide portions 113 connect the both ends of the first slide portions 111 respectively, and a square shaped lower window 114 is arranged at the center area surrounded by the first slide portions 111 and the second guide portions 113. 115 is a first drive apparatus for moving the first slider 10 along the first axis. The first drive apparatus 115 comprises a pair of ball screws 116, a pair of feeding nuts 117 and a pair of servo motors 118. The ball screws 116 extend along the first axis, is rotatably journaled on the upper mounting surfaces of the first guide portions 107 and is located outside of and parallel to the first guide rails 112. The feeding nuts 117 that engage the ball screws 116 and are fixed to the first slide portions 111. The servo motors 118 are affixed to the first guide portions 107 to drive the ball screws 116 respectively. Instead of mounting ball screws on the upper mounting surfaces, it is possible to affix each of the ball screws 116 to each of the first slide portions 111, to rotatably hold each of the feeding nuts 117 on the first guide portions 107 and to rotate the feeding nuts 117 by the servo motors 118.

A second slider 120 that is slidably mounted on the first slider 110 is movable along the second axis (X-axis) horizontal and perpendicular to the first axis. A pair of second slide portions 121 of the second slider 120 are slidably mounted on the second guide portions 113 for movement along the second axis. A pair of second guide rails 122 which are extended along the second axis are secured to each of the upper mounting surfaces of the second guide portions 113, and the second slide portions 121 are movably mounted on the second guide rails 122 respectively. The both end portions of the second slide portions 121 are connected by the connection portions respectively and also the vertical third guide portions 123 are connected to the rear side portion 121. The second slider 120 is at the center thereof provided with a square shaped upper window 124 facing to the third guide 123 and leading to the lower window 114. 125 is the second drive apparatus for reciprocally moving the second slider 120 along the second axis. A pair of ball screws 126 of the second drive unit 125 are rotatably journaled to the upper mounting surfaces of the second guide portions 113 and are located outside of and parallel to the second guide rails 122. A pair of feeding nuts 127 that are affixed to the second slide portions 121 engage the ball screws 126 respectively. The ball screws 126 are mounted on each of the second guide portions 113 and rotated by servo motors 128.

A vertical spindle head 130 rotatably supports the main spindle 131that is driven by a motor 137. The spindle head 130 is slidably mounted on the third guide portions 123 and vertically movable through the upper window 124 with being guided by a pair of third guide rails 132 secured to the guide portions 123 along the third axis (Z-axis) perpendicular to the first and second axes. 133 is a third drive apparatus for vertically moving the spindle head. A feeding nut affixed to the main spindle head 130 engages a ball screw, not illustrated, that is rotatably journaled to the third guide portion 12 and is rotated by a servo motor 134.

The main spindle unit 140 comprises the base 106, the first slider 110 which is slidably mounted on the base 106 for movement along the first axis and is reciprocally driven by the first drive apparatus 115, the second slider 120 which is slidably mounted on the first slider 110 for movement along the second axis perpendicular to the first axis and is reciprocally driven by the second drive apparatus, the main spindle 130 which is slidably mounted on the second slider 120 for movement along the third axis perpendicular to the first and second axes and is reciprocally driven by the third drive apparatus 133 and the main spindle 130 which is journaled by the spindle head 131 holding a changeable tool at the lower end thereof is rotated by a motor 137.

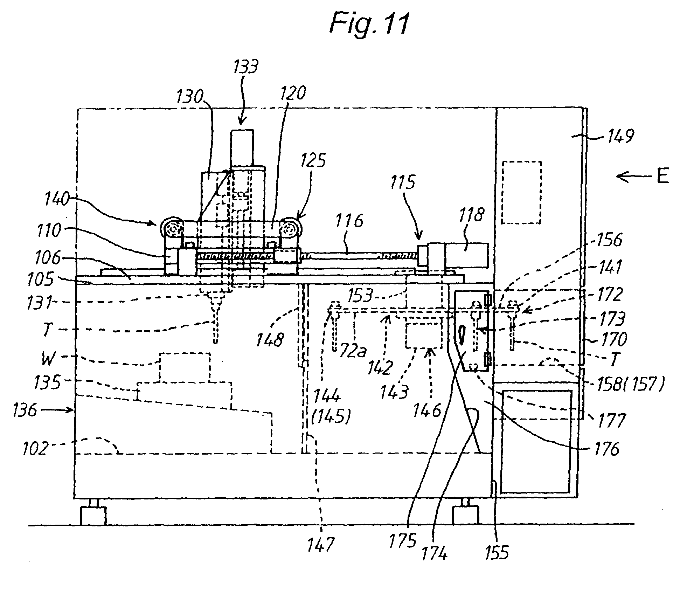

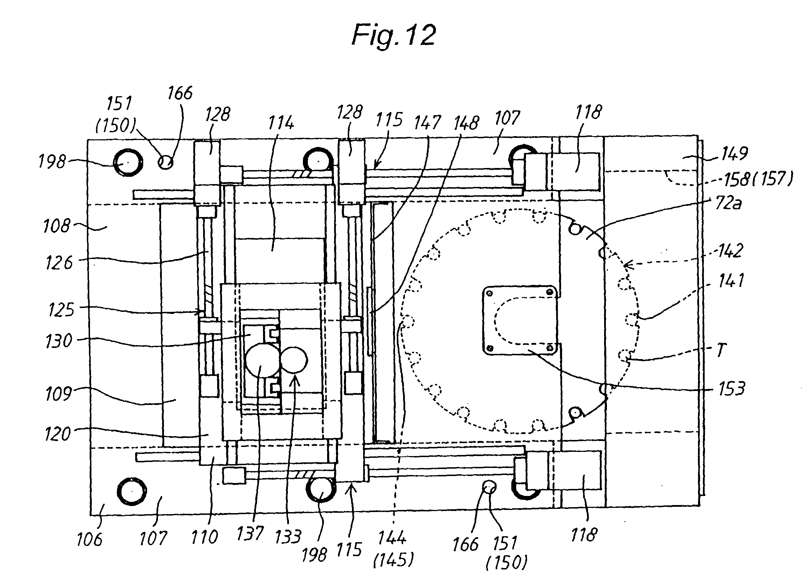

As shown in Figure 11 and Figure 12, the tool storage magazine apparatus 142 that stores a plurality of tools in the tool hold portions 141 is supported by a support base 153 fixed to the rear portion of the base 106 and the magazine plate 72a is mounted to the support base 153 to be rotatable around the vertical axis parallel to the axis of the main spindle 131. 143 is a rotary drive apparatus that rotatably index the magazine plate 72a so that the selected one of the tool hold portions 141 is positioned to the tool exchange position 144 to exchange the tool held therein with the tool that is held by the main spindle 131 positioned to the tool exchange position 145.

147 is a cover to divide the operation space 104 into the front room at which the jig apparatus 135 is arranged and the rear room at which the tool storage magazine 142 is arranged. The cover 147 prevents coolant and cutting chips from disseminating over the tool storage magazine apparatus 142. The cover 147 is provided with a door 148 that opens to allow the main spindle 131 to move to the tool exchange position 145 for exchanging tools.

Further, as a cover apparatus dividing the operation space 104 into the front room and the rear room, as in the first embodiment, it is possible to attach the movable cover to the magazine plate 72a. The movable cover separates the main spindle and the magazine plate 72a when the magazine plate 72a is at the rest position and is opened by rotating with the magazine plate 72a when the magazine plate 72a is in the tool exchange position.

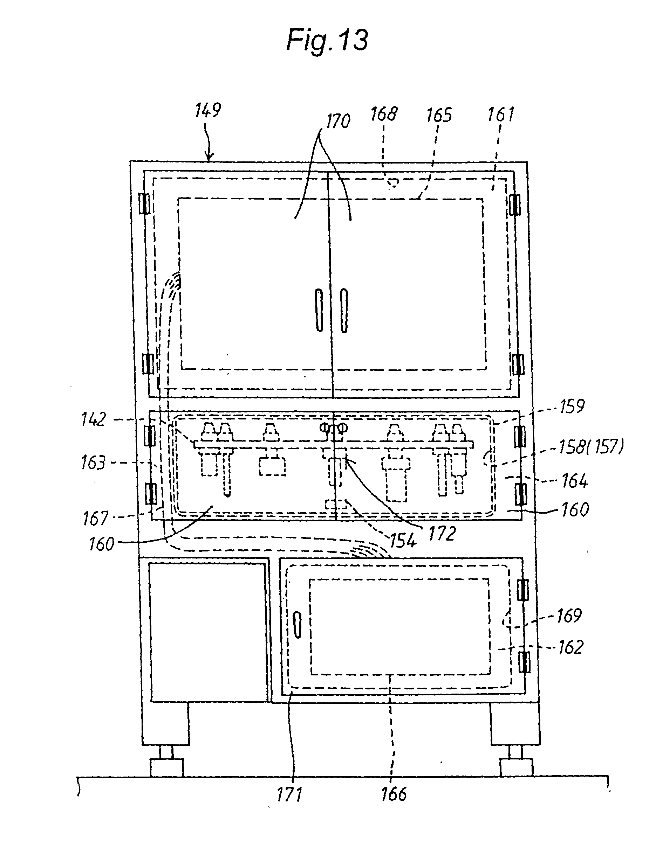

149 is a controller box that accommodates controllers, and vertically fixed to a lower rear end face 155 that is extended along the second axis at the rear end of the bed 101. To change tool T stored in the tool storage magazine apparatus 142 from the tool change position 172 located behind the machine tool, a through space 157 is arranged along the first axis at the controller box 149 at the position opposing the rear end portion 156 of the tool storage apparatus 142. I.e., as shown in Figure 11 and 13, at the controller box 149, a through way 158 like a tunnel is arranged at the position opposing the rear end portion 156 of the tool storage magazine apparatus 142 along the first axis. The wall of the through way 158 is made of thin boards 159 that are separating inside the controller box 149 from the through way 158. The rear end opening of the through way 158 are opened and closed by a double door 160. 154 is a limit switch that is turned on when the double door 160 closes the through way 158 and is turned off when the double door 160 is opened. The limit switch 154 acts as an inter-lock for disabling the tool exchange operations of the machine tool. By this inter-lock, when the double door 160 is opened during in the automatic operations, the operations of the machine tool is completely stopped or the relative movements of the main spindle 131 toward a workpiece W is continued until the order of a tool change movement, such as rotation of a magazine plate 72a, is given; and then, the operations of the machine tool is stopped and the tool change movement is disabled. Also, when the machine tool is in the step by step operation mode, the tool change operation, such as rotation of the magazine plate 72a, is disabled. As shown in Figure 11 and Figure 12, by positioning the rear end portion 156 of the tool storage magazine 142 within the through way 158, the accessibility to the rear end portion 156 of the tool storage magazine apparatus 142 is improved and also the total length of the machine tool is shortened.

Inside of the controller box 149, upper and lower rooms 161, 162 and left and right rooms 163, 164 are arranged around the through way 158. In the upper and lower rooms 161, 162, controllers 165 and 166, such as numerically controllers, are accommodated and in the left and right rooms 163, 164, wiring 167 that connects the controllers 165, 166 is passing through. At the front of the upper and lower rooms 161, 162, openings 168, 169 are arranged and the openings 168, 169 can be opened and closed by a double door 170 and an opening door 171

The other way to change a tool T stored in the tool storage magazine apparatus 142 is that the tool T can be changed from the tool change position 173 located at the side of the machine tool. To change the tool T from the tool change position 173, a space 174 is arranged at the position opposing the rear side portion of the tool storage magazine apparatus 142 between the back face of the controller box 149 and the rear end of the bed 101. A lower rear end face 155 is arranged to fix the controller box 149 at the rear end of the bottom portion 102 of the bed 101, and a notch is uprightly arranged thereon at the rear end of the side walls 103 of the bed 101 to arrange a space 174 between the rear end of the bed 101 and the back face of the controller box 149. A cover 176 has a door 175 that covers the space 174, and tools T stored in the tool storage magazine apparatus 142 can be changed from the side of the machine tool by opening the door 175. 177 is a limit switch that turns off while the door 175 is opened and the limit switch acts as an inter-lock to disable the tool exchange movements the same as the above limit switch 154.

As mentioned above, tools T can be changed from the rear, the side or both the rear and side of the machine tool; and therefore, it is possible to optimize the tool change position when a machine layout is changed by selecting the either of the tool change positions.

Next, the means of assembling the above mentioned machine tool having a tool storage magazine apparatus is explained based on the Figure 10 to Figure 12, Figure 14 and Figure 15. A pair of reference holes 150 are arranged on the upper mounting surfaces of the U-shaped bed 101. A jig apparatus 135 is positioned at and mounted on the bottom portion 102 of the bed 101 by using the reference holes 150 as reference. A cover 147 is affixed to the center area of the operation space 104, and a controller box 149 that accommodates controllers 165, 166 is fixed at the rear end of the bed 101. Thus, the bed unit 136 is pre-assembled by mounting the jig apparatus 135 on the bed 101 and fixing the controllers 165, 166 to the bed 101.

The main spindle unit 140 can be pre-assembled while pre-assembling the bed unit 136. Reference holes 151 corresponding to the reference holes 150 are arranged at a pair of first guide portions 107 of a base 106. A pair of slide portions 111 of a first slider 110 are horizontally and parallely mounted on the first guide portions 107 using the reference holes 151 as reference and are movable along the first axis. The first drive apparatus 115 comprising a ball screw 116, feeding nut 117 and servo motor 118 is assembled to the base 106 and the first slider 110. A pair of the second slide portions 121 of a second slider 120 are horizontally slidably mounted on a pair of the second guide portions 113 of the first slider 110 for movement along the second axis perpendicular to the first axis. A second drive apparatus 125 comprising a ball screw 126, feeding nut 127 and servo motor 128 is assembled to the first slider 110 and the second slider 120. A spindle head 130 that is assembled to third guide portions 123 of the second slider 120 is movable along the third axis perpendicular to the first and second axes. The third drive apparatus 133 comprising a ball screw, feeding nut and servo motor 134 is assembled to the third guide portion 123 of the second slider 120 and the spindle head 130. Thus, a main spindle unit 140 is pre-assembled by mounting the spindle head 130 on the base 106 as to be movable along the three axes perpendicular to each other. In this case, both ends of the first guide portions 107 of the base 106 are connected by a pair of the connection portions 108 to from the through space 109; and therefore, high rigidity of the base 106 is realized as the base of the main spindle unit 140 and also the main spindle 131 is movable through a through space 109 to the operation space 104 by simply mounting the base 106 and fixing it to the side walls 103 of the bed 101. Instead of connecting both ends of the first guide portions 107 by connection portions 108, it is possible to connect just one side of the first guide portions 107 by a connection portion 108.

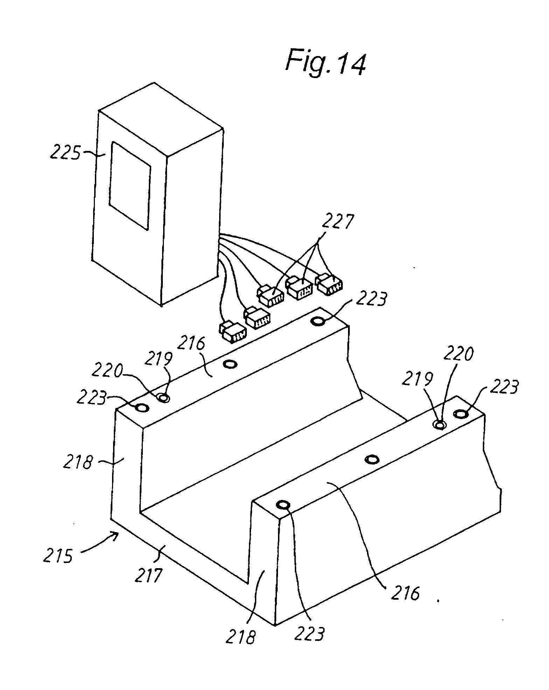

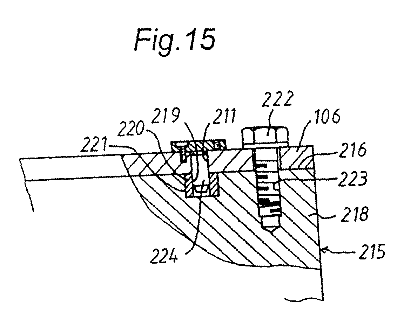

The tool storage magazine apparatus 142 having the rotatable magazine plate 72a is mounted on a support base 153. A rotary drive apparatus 143 that indexably rotates the magazine plate 72a is fixed to the support base 153. The support base 153 is mounted on the base 106 of the main spindle unit 140 and the base 106 is mounted on upper horizontal reference surfaces 216 arranged on a reference bed 215. As shown in Figure 14, the shape of the reference bed 215 is the same as that of the bed 101, and a pair of side walls 218 are uprightly arranged from both sides of the bottom portion 217 and the reference surfaces 216 are formed on each top of the side walls 218. Reference holes 219 are arranged on the reference surfaces 216 at the position that is the same as the reference holes 150. In Figure 15, a bush 220 provided with a reference hole 219 therein is inserted into and fixed to a hole 221 on the reference surface 216. On the reference surfaces 216, a plurality of female screws 223 are arranged for fixing the base 106 by screwing bolts 222.

The base 106 of the main spindle unit 140 having the tool storage magazine apparatus 142 is positioned on the horizontal reference surfaces 216 of the reference bed 215. A this position, the first axis of the main spindle unit 140 of the base 106 is parallel to the side walls 218 of the reference bed 215 by inserting locate pins 224 into the reference holes 51 and reference holes 219 on the base 106. Then, the base 106 is fixed on the reference surfaces 216 by screwing the bolts 222 into the female screws 223. Thereby, the first slider 110 is possible to slide on the base 106 along the first axis that is horizontal and parallel to the side walls 218. Connectors that are connected to the servo motors 118, 128 and 134 of the first, second and third drive apparatuses 115, 125 and 133 of the main spindle unit 140 and the rotary drive apparatus 143 that rotates the magazine plate 72a are connected to connectors 227 of a numerical controller 225 for pre-assembling. And then, by indexably rotating the magazine plate 72a by the rotary drive apparatus 143, the tool hold portion 141 holding a cylindrical masterpiece is indexed to the tool exchange position 144. To position the main spindle 131 near the upper portion of the masterpiece after affixing a dial gauge to the main spindle 131, the first slider 110, the second slider 120 and the spindle head 130 is little by little moved by the servo motors 118, 128 and 134 that are controlled by the numerical controller 225. The difference between the axial line of the main spindle 131 and the center of the tool exchange position is detected by contacting a probe of the dial gauge to the external contour of the masterpiece and by manually rotating the main spindle 131. To be nil the difference, the position of the main spindle is adjusted in the X, Y-axis directions. When the difference is nil, the X and Y coordinates of the first slider 110 and the second slider 120 are memorized by the numerical controller 225. Then, after affixing the tool T to the main spindle 131, the tool exchange position 145 of the Z-axis direction of the main spindle 131 is set up by memorizing the Z-axis coordinates of the spindle head 130 when the main spindle 131 is positioned to line up with the tool holding portion 141of the tool T in the Z-axis direction.

After completing the set up of the tool exchange position 145 of the main spindle 131 in a pre-determined relation with the tool exchange position 144, the base 106 of the main spindle unit 140 is removed from the reference bed 215 and is mounted on the horizontal upper mounting surfaces 105 of the bed 101 of the bed unit 136. Then, the base 106 is positioned to the bed 101 by inserting the locate pins 166 into the reference holes 151 arranged at the base 106 and the reference holes 150 arranged at the upper mounting surfaces 105 and is fixed on the upper mounting surfaces 105 by screwing bolts 198. Thus, each of first guide portions 107 of the base 106 of the main spindle unit 140 is fixed on the horizontal upper mounting surfaces 105 in parallel relation with the side walls 103, and the tool T held by the main spindle 131 of the main spindle unit 140 is able to move toward the workpiece W clamped by the jig apparatus 135. Each of the X, Y, Z-axis coordinates of the first slider 110, the second slider 120 and the spindle head 130 that is memorized by the numerical controller 225 for pre-assembling when the tool exchange position 145 is set up by positioning the main spindle 131 on the reference bed 215 as above mentioned are set as parameters to the numerical controller 165.

In the above embodiment, the workpiece W is clamped by the jig apparatus 135, the servo motors 118, 128 and 134 rotate the ball screws 116 and 126 based on the orders from the controllers 165, 166. Therefore, the first slider 110 moves along the first axis, the second slider 120 moves along the second axis and the main spindle 130 moves vertically and the tool T held by the main spindle 131 machines the workpiece W as programmed.

When a tool change order is given from the numerical controllers 165, the magazine plate 72a is indexably rotated by the rotary drive apparatus 143 and the empty tool hold portion 141 is indexably positioned to the tool exchange position 144. The main spindle 131 is positioned to the starting position of exchanging tools that is the same position as the tool exchange position 145 in the X, Z-axis directions. Then, the open and close door 148 of the cover 147 is opened and the first slider 110 is moved along the Y-axis by the servo motor 118. The main spindle 131 is positioned to the tool exchange position 145 and the tool T held by the main spindle 131 is delivered to the tool hold portion 141. The main spindle 131 releases the tool T and the spindle head 130 is moved up by the servo motor 134 to complete the delivery of the tool T held by the main spindle 131 to the tool hold portion 141. The magazine plate 72a is rotatably indexed by the rotary drive apparatus 143, the tool hold portion 141 holding the next tool T is indexed to the tool exchange position 144; and then, the tool T is inserted to the main spindle 131 by moving down the spindle head 130. The first slider 110 is moved along the Y-axis toward the starting position of exchanging tools to remove the tool T from the tool hold portion 141. Finally, the tool T is moved to a machining position via the starting position of exchanging tools for machining the workpiece W.

When many machine tools are arranged side by side with narrow spaces and the tool change positions are located at the rear of the machine tools, to change a tool T stored in the magazine plate 72a, the magazine plate 72a is rotated by the rotary drive apparatus 143 to index the tool hold portion 141 holding the tool T to be changed to the tool change position 172 with the step operation mode of the controllers 165 and 166. Then, by opening the door 160 from behind the machine tool, the tool T is taken through the through way 158 from the tool hold portion 141 indexed to the tool change position 172 and is changed with a new tool T. The machine tool continues machining after closing the door 160 and switching the controllers 165, 166 to the automatic operation modes.

When the tool change position is needed to be arranged at the left side of the machine tool because of the machine layout, to change the tool T stored in the tool storage magazine apparatus 142, the tool hold portion 141 holding the tool T to be changed is indexed to the tool change position 173 located at the left side of the machine tool. Then, by opening the door 175 from the left side of the machine tool, the tool T indexed to the tool change position 173 is changed with a new tool T. The machine tool can re-start the operations after closing the door 175.

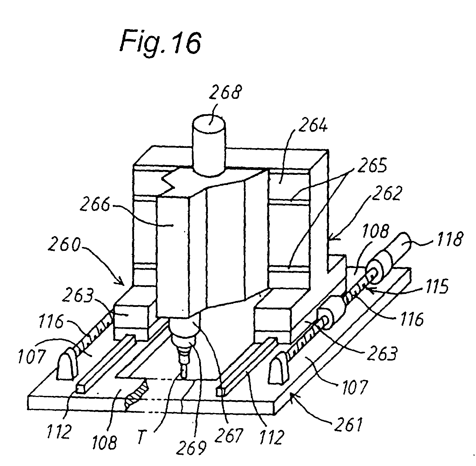

The main spindle unit of the second embodiment mentioned above has a spindle head 130 for high accuracy machining; however, as shown in Figure 16, it is also possible to have the main spindle unit 260 having the main spindle 267 for drilling. A base 261 and the base 106 are identical, and the detailed explanation is omitted with marking same reference numbers to the same parts. A pair of slide portions 263 of a first slider 262 are slidably mounted on a pair of guide portions 107 of the base 261 respectively and are movable along the first axis. Second guide portions 264 that are connected to a pair of slide portions 263 are mounted to the first slider 262, a pair of second guide rails 265 secured along the second axis are mounted to the second guide portions 264, and the second slider 266 is slidably mounted to the second guide rails 265 and is moved by the second drive apparatus, not illustrated. A ram 267 supported by the second slider 266 is used as a main spindle and is moved along the third axis by the servo motor 268. In the ram 266, the main spindle 269 holding the tool T at the lower end thereof is rotatably journaled.

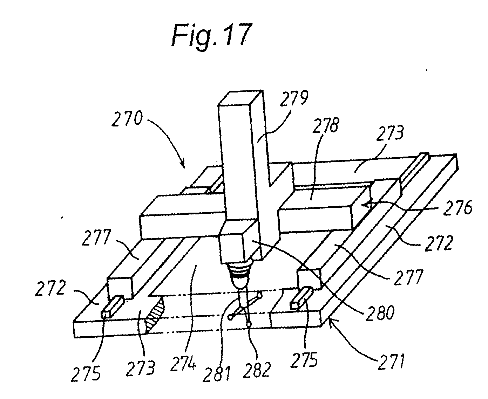

The main spindle unit 270 having the spindle head 280 for measurement will be explained based on Figure 17. The base 271 taking the form of a square shape has a pair of first guide portions 272 and the connection portions 273 that connect the both ends of the first guide portions 272. A through space 274 leading to an operation space 104 is arranged at the center area surrounded by the first guides 272 and connection portions 273. A pair of slide portions 277 of the first slider 276 are slidably mounted on a pair of first guide rails 275 that are secured along the first axis to the upper mounting surfaces of the first guide portions 272 of the base 271. The first slider 276 is driven along the first axis by the first drive apparatus, not illustrated. A pair of second guide portions 278 connecting the first slide portions 277 are arranged at the first slider 276. A second slider 279 is slidably mounted on the second guide portions 278 and is moved along the second axis by a second drive apparatus, not illustrated. A spindle head 280 for measurement supported on the second slider 278 is vertically movable and is moved along the third axis by the third drive apparatus, not illustrated. A vertical main spindle 281 is rotatably journaled in the spindle head 280 and holds a touch probe at the lower end thereof.

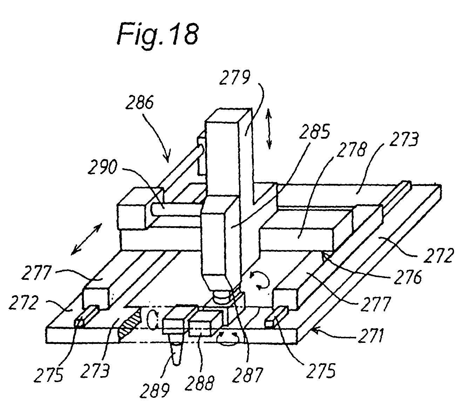

In Figure 18, a main spindle unit 286 having a spindle head 285 for laser machining is shown. The base 271, the first slider 276 and the second slider 279 are identical to those of the main spindle unit 270; and therefore, the explanation is omitted with marking the same reference numbers to the same parts. The spindle head 285 for laser machining is movably mounted to the second slider 279 for movement along the third axis by a third drive apparatus, not illustrated. A vertical main spindle 287 holding a rotary device 288 is indexably journaled in the spindle head 285 and a torch 289 is indexably journaled in the lower end of the rotary device 288. A laser guide 290 attached to the spindle head 285 leads leaser beams from a laser generator to the torch 289.

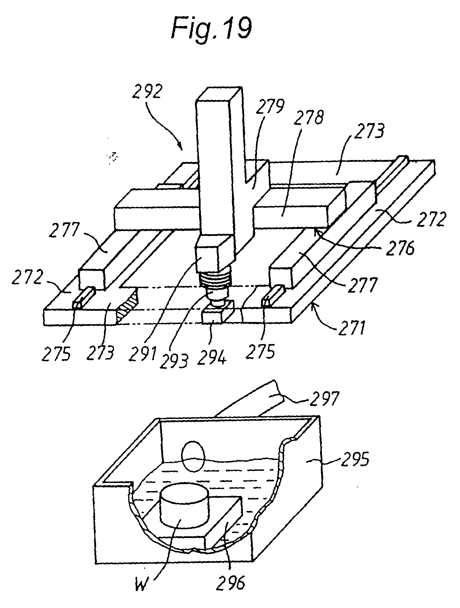

In Figure 19, a main spindle unit 292 having a spindle head 291 for electric discharge machining is shown. A base 271, a first slider 276 and a second sliders 279 are identical to those of the main spindle unit 270 having the spindle head 280 for measuring and the explanation is omitted with marking the same reference numbers to the same parts. The spindle head 291 for electric spark machining is movably mounted on the second slider 279 for movement along the third axis by the third drive apparatus, not illustrated. A main spindle 293 is journaled in the spindle head 291 and an electrode 294 is attached to the lower end of the main spindle 293. An electrolytic tank 295 that stores electric solution is fixed at the bottom portion 102 of the bed 101. A jig apparatus 296 clamping a workpiece W is fixed in the electrolytic tank 295 to the bottom portion of the bed 101. A pipe 297 introduces the electric solution into and out from the electrolytic tank 295.

Next, to change a tool T stored in a tool storage magazine apparatus 142 from behind a machine tool, the other embodiment of the machine tool that has a through space at a controller box at the position facing to the rear end portion 156 of the tool storage magazine apparatus 142, will be explained.

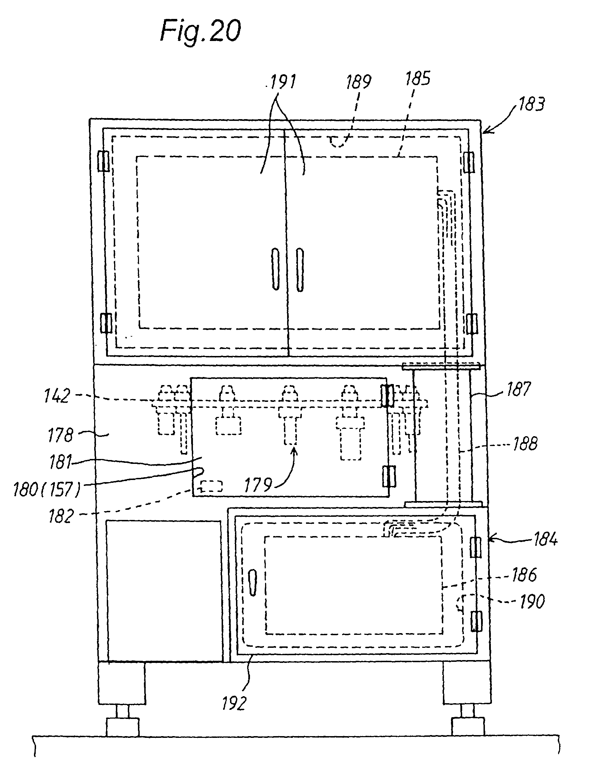

In Figure 20, a panel 178 that is used as a mounting member for mounting controller boxes is vertically fixed at the lower rear end face 155 of the bed 101. A through opening 180 that is opened and closed by the door 181 is arranged at the panel 178 at the position facing to the rear end portion 156 of the tool storage magazine apparatus 142. A tool T stored in the tool storage magazine apparatus 142 can be changed from the tool change position 179 located at the rear of the machine tool through the through opening 180. A limit switch 182 is off while a door 181 is opened and acts as an inter-lock to disable the tool exchange operations.

Controller boxes 183, 184 that accommodate controllers 185, 186, such as numerical controllers, are mounted to a panel 178 at the upper and lower sides of the through opening 180. A wiring duct 187 connects a connecting hole arranged at the corner area of the bottom plate of the upper controller box 183 and a connecting hole arranged at the comer area of the ceiling plate of a lower controller box 184. Wiring 188 that connects the controllers 185 and 186 is passed through the duct. Openings 189 and 190 are arranged at the front of the controller boxes 183, 184 and the openings 189, 190 can be opened and closed by a double door 191 and an opening door 192.

To change a tool T stored in the tool storage magazine apparatus 142 from a tool change position 173 located at the side of the machine tool, as the same as the controller box 149 mentioned before, a space 174 is arranged at the position facing to the rear side portion of the tool storage magazine apparatus 142 between the back face of the panel 178 and the rear end of the bed 101

Instead of affixing the controller boxes 183, 184 to the panel 178 fixed at the lower rear end face 155 of the bed 101, it is also possible to directly affix the lower controller box 184 to the lower rear end face 155 of the bed 101 and affix the upper controller box 183 to the wiring duct 187 that is attached to the lower controller box 184.

In the second embodiment mentioned above, the first slider 110 is slidably mounted on the base and is horizontally movable along the first axis, the second slider 120 is slidably mounted on the first slider 110 and is horizontally movable along the second axis perpendicular to the first axis, and the spindle head 130 having rotatable the main spindle 131 is slidably mounted on the second slider 120 and is vertically movable. However, it is also possible to arrange that a saddle is slidably mounted on the base along the second axis, the column (slider) is slidably supported on the saddle along the first axis and the spindle head having the rotatable spindle is vertically slidably supported on the column.

It is also possible to arrange that a column (slider) is slidably mounted on a base for movement along the first axis, a spindle head is movably supported on the column for movement along the third vertical axis, and a table that clamps a workpiece is slidably mounted on the bottom portion of the bed for movement along the second axis.

In the embodiment mentioned above, by coinciding the tool exchange position 145 of the main spindle 131 with the tool exchange position 144 of the tool storage magazine apparatus 142, a tool T held by the main spindle 131 is directly exchanged with a tool T held by the tool hold portion 141 of the tool storage magazine apparatus 142. However, it is also possible to separate the tool exchange position 144 and the tool exchange position 145 by arranging a tool exchange arm that holds each of tools T, such as a used tool T and a new tool T, held in the tool hold portion 141 indexed to the tool exchange positions 144 and in the main spindle 131 positioned to the tool exchanging position 145, and is moved downward, rotated 180 degrees, then moved upward to insert a new tool T to the main spindle 131 and return a used tool T to the tool hold portion 141.

Having now fully set forth both structure and operation of a preferred embodiment of the concept underlying the present invention, various other embodiments as well as certain variations and modifications of the embodiment herein shown and described will obviously occur to those skilled in the art upon becoming familiar with said underlying concept. It is to be understood, therefore, that within the scope of the appended claims the invention may be practiced otherwise than as specifically set forth herein.

A machine having a vertical main spindle include a bed having a bottom portion and a pair of walls arranged uprightly from both ends of the bottom portion, the sidewalls having horizontal upper mounting surfaces thereon. A first slider is slidably horizontally mounted on the upper mounting surfaces for movement along a first axis. A second slider is slidably horizontally mounted on the first slider and guided by a pair of guide rails arranged on the first slider for movement along a second axis perpendicular to the first axis. A jig apparatus is mounted on the bed for clamping a workpiece at a position lower than the first slider. A spindle head that vertically supports a main spindle is mounted on the second slider so that the main spindle is moved along the third axis perpendicular to the fist and second axes between the guide rails.

## Claims

1. A machine having a vertical main spindle comprising:
a bed having a bottom portion and a pair of side walls arranged uprightly from both ends of said bottom portion, said sidewalls having horizontal upper mounting surfaces thereon;
a first slider slidably horizontally mounted on said mounting surfaces for movement along a first axis;
a second slider slidably horizontally mounted on said first slider and guided by a pair of guide rails arranged on said first slider for movement along a second axis perpendicular to said first axis;
a jig apparatus mounted on said bed for clamping a workpiece at a position lower than said first slider; and
a spindle head that vertically supports a main spindle being mounted on said second slider for movement along a third axis perpendicular to said fist and second axes, said main spindle moving along said third axis between said guide rails.

2. A machine having a vertical spindle as set forth in claim 1, wherein said main spindle moving along said third axis through openings made at said first slider and said second slider.

3. A machine having a vertical main spindle as set forth in claim 1, further comprising:
a tool storage magazine apparatus having a magazine member holding a plurality of tools to be held by said main spindle and being rotatably indexable around an axis parallel to said third axis, said main spindle being adapted to hold a tool at a lower end thereof to machine said workpiece and moving along said third axis between said guide rails;
a cover apparatus separating machining area and said tool storage magazine apparatus in an operation space while said magazine member is at a rest position, said cover apparatus being provided with an opening to allow said magazine plate indexing; and
a movable cover being attached to said magazine member to rotate therewith and to close said opening when said magazine plate is at the rest position.

4. A machine having a vertical main spindle comprising:
a bed having a bottom portion and a pair of side walls arranged uprightly from both ends of said bottom portion and having horizontal upper mounting surfaces thereon, said bottom portion and said sidewalls defining an operation space;
a base fixed on said upper mounting surfaces, said base having a pair of first guide portions and connection portion connecting said first guide portions, said first guide portions and connection portion defining a through space leading to said operation;
a first slider having a pair of first slide portions horizontally slidably mounted on said first guide portions for movement along a first axis and having second guide portions connecting said first slide portions;
a first drive apparatus for moving said first slider along said first axis;
a second slider horizontally slidably mounted on said second guide portions for movement along a second axis perpendicular to said first axis;
a second drive apparatus for moving said second slider along said second axis;
a spindle head vertically supporting a main spindle, said spindle head being slidably mounted on said second slider for movement along a third axis perpendicular to said first and said second axes;
a third drive apparatus for moving said spindle head along said third axis; and
a jig apparatus for clamping a workpiece being mounted on said bed at a position lower than said first guide portions in said operation space.

5. A machine having a vertical main spindle as set forth in claim 4, wherein said second guide portions connecting both ends of said first slide portions, said first slide portions and said second guide portions defining a lower window leading to said operation space through said through space, said second slider having a pair of second slide portions mounted on said second guide portions and a pair of connection portions connecting both ends of said second slide portions, said second slide portions and said connection portions defining an upper window leading to said operation space through said lower window and said through space, said main spindle being movable through said upper window, said lower window and said through space.

6. A machine having a vertical main spindle as set forth in claim 5, further comprising a tool storage magazine apparatus having a magazine member that holds a plurality of tools to be held by said main spindle and is rotatably indexable around an axis parallel to said third axis, said tool storage magazine apparatus being mounted to said base, and said main spindle being adapted to hold a tool at a lower end thereof to machine said workpiece.

7. A machine having a vertical main spindle as set forth in claim 6, further comprising:
a cover apparatus separating machining area and said tool storage magazine apparatus in the operation space while said magazine member is at a rest position, said cover apparatus being provided with an opening to allow said magazine member being indexed; and
a movable cover rotatable with said magazine member so as to close said opening when said magazine member is at the rest position.

8. A method of making a machine having a vertical main spindle comprising:
pre-assembling a main spindle unit, pre-assembling a bed unit and assembling a pre-assembled main spindle unit onto a pre-assembled bed unit, said pre-assembling a main spindle unit comprising:
slidably mounting a first slider having a pair of first slide portions and a second guide portions connecting said first slide portions on a base having a pair of first guide portions and connection portion connecting said first guide portions, said first slider being guided by said first guide portions horizontally along a first axis;
mounting a first drive means for moving said first slider along said first axis between said base and said first slider;
horizontally slidably mounting a second slider on said second guide portions for movement along a second axis perpendicular to said first axis;
mounting a second drive means for moving said second slider along said second axis between said first slider and said second slider;
slidably mounting a spindle head supporting a main spindle on said second slider for movement along perpendicular to said first axis and said second axis; and
mounting a third drive means for moving said spindle head along said third axis between said second slider and said spindle head; further
said pre-assembling a bed unit comprising:
mounting a jig apparatus for clamping a workpiece on a bottom portion of a bed having a pair of upright side walls at both ends of said bottom portion,
said side walls having horizontal upper mounting surfaces; and
said assembling a pre-assembled main spindle unit onto a pre-assembled bed unit comprising:
mounting said base of said pre-assembled main spindle unit onto said upper
mounting surfaces of said pre-assembled bed unit.

9. A method of making a machine having a vertical main spindle as set forth in claim 8, wherein said pre-assembling a spindle unit further comprising:
mounting a tool storage magazine apparatus having a magazine member holding a plurality of tools to be held by said main spindle to said base, said magazine member being rotatably indexed by a rotary drive means around an axis parallel to said third axis, said main spindle being adapted to hold a tool at a lower end thereof to machine said workpiece.

10. A method of making a machine having a vertical main spindle as set forth in claim 9, wherein said mounting a tool storage magazine apparatus to said base comprising:
setting up of a tool exchange position of said main spindle in a predetermined relation with a tool exchange position of said tool storage magazine apparatus.

11. A method of making a machine having a vertical main spindle as set forth in claim 10, wherein setting up of a tool exchange position of said main spindle comprising:
mounting and positioning said base of said main spindle unit having said tool storage magazine apparatus onto a reference bed; and
connecting said first, second, third and rotary drive means to a controller for pre-assembling.

12. A machine having a vertical main spindle holding a tool at lower end to machine a workpiece comprising:
a bed having a jig apparatus for clamping a workpiece;
a main spindle unit mounted on said bed and supporting said main spindle relatively movable toward a workpiece clamped by said jig apparatus;
a tool storage magazine apparatus storing a plurality of tools for changing a tool with said main spindle;
a controller box accommodating a controller and being fixed at a rear end of said bed, said controller box being provided with a through space at a position opposing a rear end portion of said tool storage magazine apparatus for changing tools stored in said tool storage magazine apparatus from behind a machine.

13. A machine having a vertical main spindle as set forth in claim 12, wherein said through space being a through horizontal hole like a tunnel.

14. A machine having a vertical main spindle as set forth in claim 12, wherein said rear end portion of said tool storage magazine apparatus positioned within said horizontal through way.

15. A machine having a vertical main spindle holding a tool at lower end to machine a workpiece comprising:
a bed having a jig apparatus for clamping a workpiece;
a main spindle unit mounted on said bed and supporting said main spindle relatively movable toward a workpiece clamped by said jig apparatus;
a tool storage magazine apparatus storing a plurality of tools for changing a tool with said main spindle;
a mounting member fixed at a rear end of said bed, said mounting member being provided with a through opening at a position opposing a rear end portion of said tool storage magazine apparatus for changing tools stored in said tool storage magazine apparatus from behind a machine;
a plurality of controller boxes mounted at said mounting members except for said through opening portion.

16. A machine having a vertical main spindle as set forth in claim 12, wherein a space opposing a side of rear end portion of said tool storage magazine apparatus being provided between a back face of said controller box and an rear end of said bed so as to change tools stored in said tool storage magazine apparatus from side of a machine.

17. A machine having a vertical main spindle as set forth in claim 16, wherein doors for closing said through space and said space being provided.

18. A machine having a vertical main spindle as set forth in claim 17, wherein an inter-lock means being provided for disabling tool exchange operations between said main spindle and said tool storage magazine apparatus while said door being open.

19. A machine having a vertical main spindle holding a tool at a lower end thereof for machining a workpiece comprising:
a bed having a bottom portion and a pair of side walls arranged uprightly from both ends of said bottom portion and having horizontal upper mounting surfaces thereon, said bottom portion and said sidewalls defining an operation space;
a base having a pair of first guide portions respectively fixed on said upper mounting surfaces and connection portion connecting said first guide portions, said first guide portions and connection portion defining a through space leading to said operation space;
a first slider having a pair of first slide portions horizontally slidably mounted on said first guide portions for movement along a first axis parallel to said side walls and a pair of second guide portions connecting said first slide portions, said first slide portions and second guide portions defining a lower window leading to said operation space through said through space;
a first drive apparatus for moving said first slider along said first axis;
a second slider having a pair of second slide portions horizontally slidably mounted on said second guide portions for movement along a second axis perpendicular to said first axis and a pair of connection portions connecting said second slide portions, said second guide portions and said connection portions defining an upper window leading to said operation space through said lower window and said through space;
a second drive apparatus for moving said second slider along said second axis;
a spindle head being slidably mounted on said second slider for movement along a third axis perpendicular to said first and said second axes and supporting a main spindle in such manner that at least lower end portion thereof is in said operation space through said upper window, said lower window and said through space;
a third drive apparatus for moving said spindle head along said third axis;
a jig apparatus for clamping a workpiece being mounted on said bed at a position lower than said first guide portions in said operation space.
a tool storage magazine apparatus having a magazine member holding a plurality of tools to be held by said main spindle and being rotatably indexable around an axis parallel to said third axis;
a mounting member fixed at a rear end of said bed, said mounting member being provided with a through opening at a position opposing a rear end portion of said tool storage magazine apparatus for changing tools stored in said tool storage magazine apparatus from behind a machine; and
a control box divided into a plurality of boxes to be mounted at said mounting members except for said through opening portion and accommodating a controller for controlling at least said first, second and third drive apparatus.
